# EUROPEAN PATENT APPLICATION

(11) **EP 1 361 557 A1**
(43) Date of publication of application: **12.11.2003**
(21) Application number: 02701545.2
(22) Date of filing: 14.02.2002
(51) Int. Cl.: G09G 3/20, G09G 5/00

(54) **LARGE-SIZED IMAGE DISPLAY DEVICE**

(30) Priority: 15.02.2001 JP 2001038204
(71) Applicant: MATSUSHITA ELECTRIC INDUSTRIAL CO., LTD., Kadoma-shi, Osaka 571-8501 (JP)
(72) Inventor: KISHITA, Hiroyuki, Shinagawa-ku, Tokyo 142-0043 (JP); OKAZAKI, Norihiko, Yokohama-shi, Kanagawa 232-0072 (JP)
(74) Representative: Balsters, Robert
(86) International application number: JP0201212
(87) International publication number: WO02065440

(57) **Abstract**

The present invention relates to a large-sized display apparatus and a large-sized display unit, which reduces the occurrence probability of a failure of a unit of one array causing failures of units following the failed unit of the same array as well as does not require any laborious work or constructions of setting address values in the unit control portions. The large-sized display apparatus (100) comprises a plurality of units (200) respectively connected with a plurality of unit control portions (110) each including an address acquiring section (111) for acquiring an address information element from among the picture data element circulated in bus connections; and a data acquiring section (113) for selecting a picture data element destined for the unit control portion from among the picture data elements with reference to the address information element thus acquired to acquire the picture information element whereby each of the unit control portions (110) are connected with one another and operative to acquire the picture information element in accordance with the timing signal.

## Description

### Field of the Invention

The present invention relates to a large-sized display apparatus comprising a highly reliable picture signal data transmitting system

### Background of the Invention

There have been used a wide variety of large-sized display apparatus having a width and a height of several meters or more. Such large-sized display apparatus can display large-sized pictures simultaneously to a large number of people, for example, in a theme park, or in a place at the entertaining event. The large-sized display apparatus is gaining popularity more than before as a result of the increase in the number of the theme parks and entertaining events.

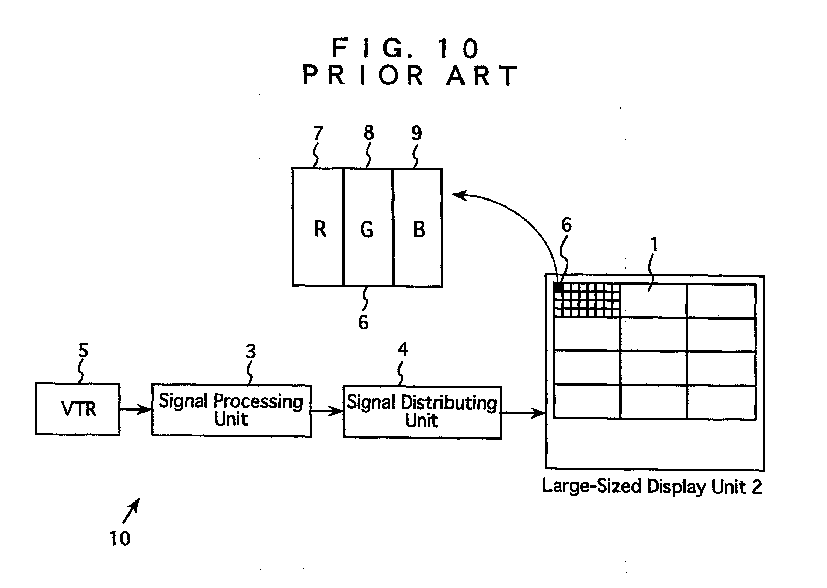

The conventional large-sized display apparatus 10 of such a type is shown in FIG. 10 as comprising a signal processing unit 3 for inputting a picture signal indicative of a picture from, for example, a VTR 5 to generate picture data, and a conventional large-sized display unit 2 for displaying the picture in response to the picture data generated by the signal processing unit 3. The conventional large-sized display unit 2 includes a plurality of units 1 aligned in rows and columns. The units 1 are adapted to selectively display picture elements. The conventional large-sized display apparatus 10 further comprises a signal distributing unit 4 for generating a plurality of picture data elements in response to the picture data generated by the signal processing unit 3 and transmitting and distributing the picture data elements to the units 1 of the conventional large-sized display unit 2. The units 1 are adapted to selectively display picture elements collectively forming the picture in response to the picture data elements transmitted and distributed by the signal distributing unit 4.

The conventional large-sized display unit 2 includes a plurality of units 1 aligned in vertical and horizontal directions. As best shown in FIG. 10, each of the units 1 includes a multiplicity of light emitting elements 6, hereinlater referred to as "picture elements". The light emitting elements 6 may be, for example but not limited to, intensity discharge lamps each including RGB picture elements, viz., a red (R) picture element 7, a green (G) picture element 8, and a blue (B) picture element 9.

The conventional large-sized display apparatus 10 employs a picture signal data transmitting system different from those of other typical display apparatuses, so as to be easily handled, carried, and maintained.

The data transmitting system performed in the conventional large-sized display apparatus 10 is required to transmit data including a plurality of picture data elements to a plurality of units 1 in an efficient manner. The data transmitting system performed by the conventional large-sized display apparatus 10 is different from those of the other typical display apparatus especially in the manner how each of unit control portions is operative to select and acquire a picture data element destined for the unit control portion from among picture data elements inputted therein.

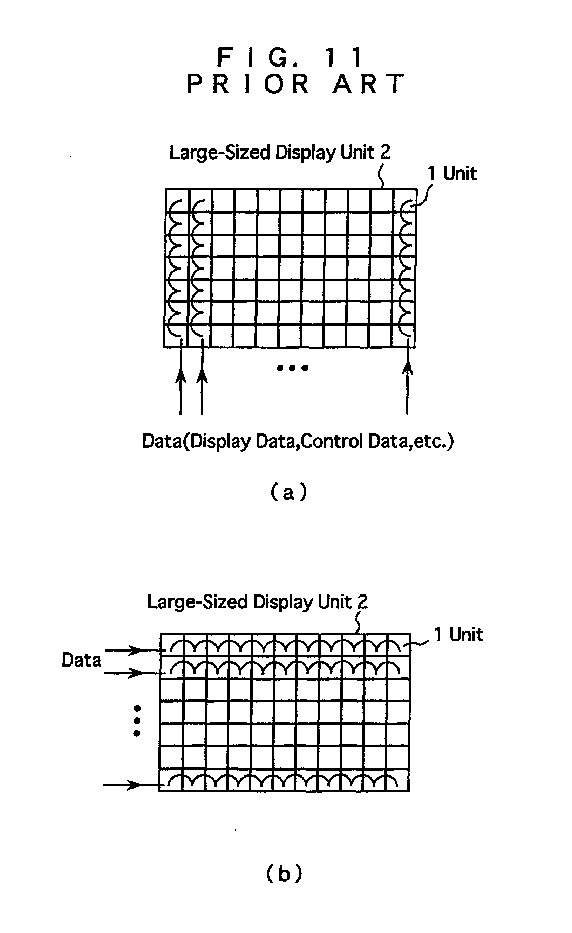

The data elements transmitted and distributed to the conventional large-sized display unit, in general, include picture information elements indicative of a picture and control information elements used to adjust the brightness of the picture to be displayed. The conventional large-sized display unit 2 includes a plurality of units 1 aligned in horizontal and vertical directions. More specifically, the units 1 are aligned as horizontal arrays or vertical arrays. This means that the data elements are transmitted and distributed to the units 1 of the conventional large-sized display unit 2 for every horizontal array or vertically array as shown in FIG. 11 (a) or FIG. 11 (b). The data elements containing the moving picture information, on the other hand, are transmitted to the units 1 for every field in order to timely update the data elements for the field of the units.

The conventional large-sized display unit 2 further comprises a plurality of unit control portions for respectively connected with and controlling the units 1. Every control portion is adapted to select a data element destined for the unit control portion from among data elements transmitted and distributed by the signal distributing unit 4 through bus connections to acquire information elements required for the unit.

Conventionally, there are provided two transmitting systems of transmitting data elements to a plurality of units including an enable signal transmitting system and an address transmitting system, which make it possible for every control portion to select and acquire a data element destined for the unit control portion from among the data elements.

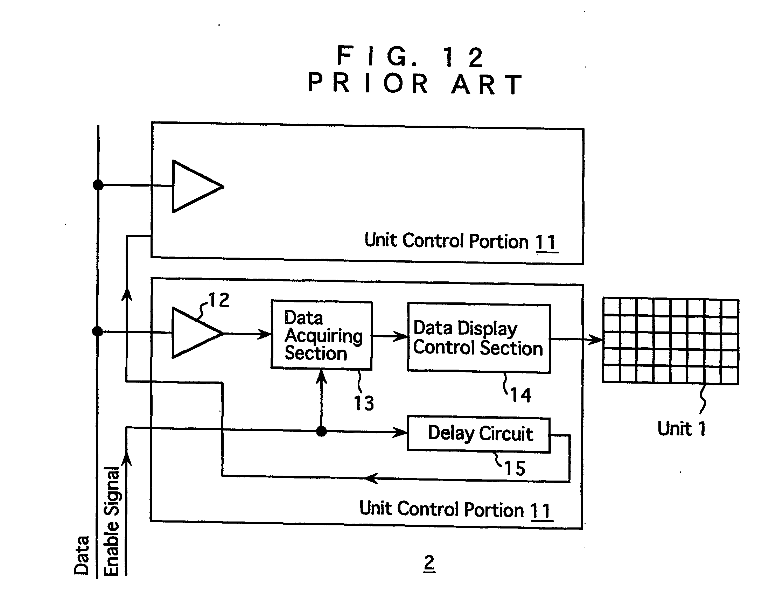

The description is now directed to a first conventional large-sized display unit comprising an enable signal transmitting system with reference to FIG. 12 of the drawings. The first conventional large-sized display unit is shown in FIG. 12 as comprising a plurality of unit control portions 11 of the enable signal transmitting system and a plurality of units. A unit control portion 11-i includes a buffer 12 for temporally storing data elements in accordance with the data processing rate so that the unit control portion 11 can properly process the data elements, a data acquiring section 13 for selecting and acquiring a data element from among a plurality of data elements with reference to an inputted enable signal, a data display control section 14 for controlling the unit 1 to selectively display a picture element forming part of the picture in response to the picture information element and adjust the brightness of the picture element to be displayed in response to the control information element acquired by the data acquiring section 13, and a delay circuit 15 for delaying the enable signal for a predetermined time period so that the enable signal is circulated to a subsequent control portion 11 so as to circulate the enable signal.

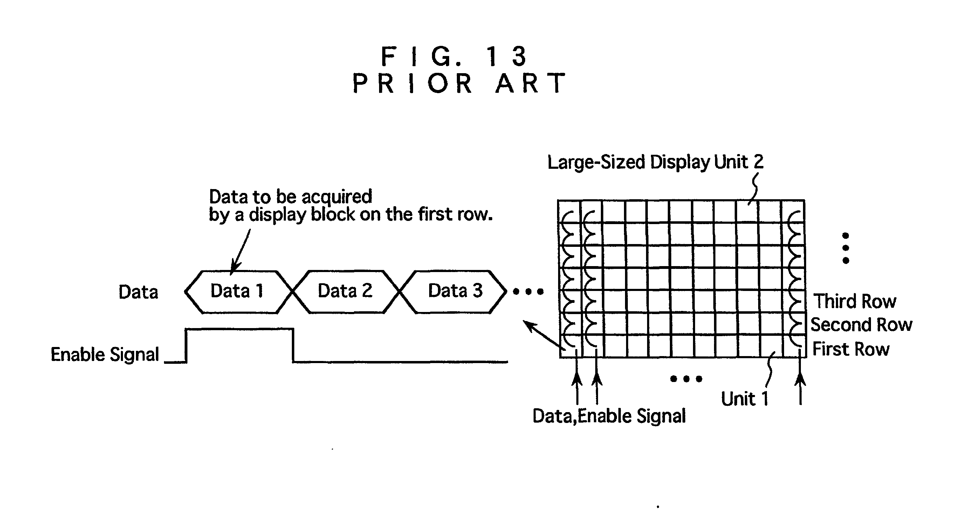

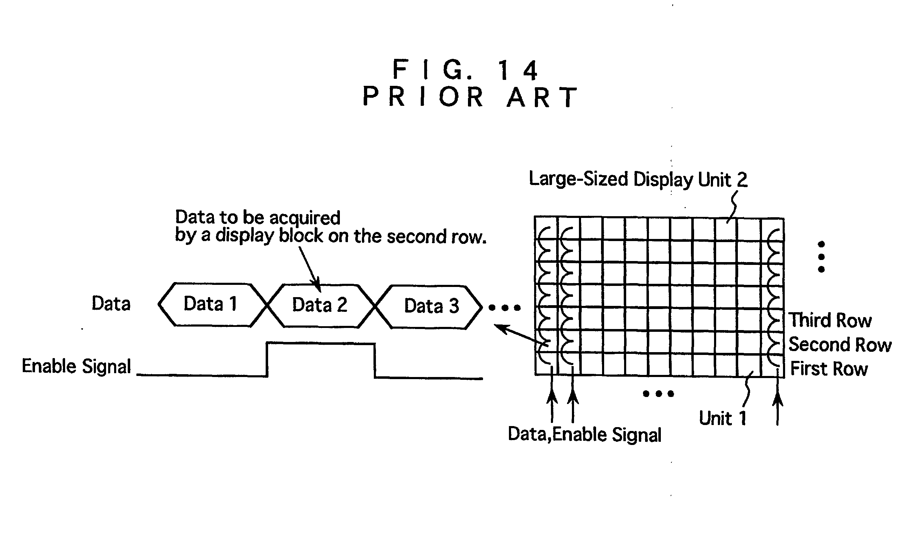

The description is directed to the operation of acquiring data elements performed by the unit control portions of the large-sized display apparatus comprising an enable signal transmitting system with reference to FIGS. 13 and 14 of the drawings. The unit control portion connected with a unit of a first row of a first column, for example, is operated to select data 1, i.e., a data element 1 from among a plurality of data elements with reference to the enable signal to acquire information elements required for the first unit as shown in FIG. 13. The enable signal is then transmitted to a second control portion connected with a second unit of a second row of the same column. As shown in FIG. 14, the second control portion is operated to select data 2, i.e., a data element 2 from among a plurality of data elements with reference to the enable signal thus received to acquire information elements required for the second unit of the second row of the first column. The enable signal is then transmitted to a third control portion 11-3 connected with a third unit 1-3 of a third row of the same column. In this manner, the enable signal is circulated from first control portions connected with first units of the first row of columns to end control portions connected with end units of the end row of the columns. This means that the unit control portions of every column can sequentially receive respective data elements with reference to the enable signal thus circulated.

The data display control section 14 is adapted to control the unit 1 to selectively display a picture element forming part of the picture in response to the picture information element and adjust the brightness of the picture element to be displayed in response to the control information element. This means that the unit control portions 11 are adapted to respectively control the units 1 in response to the picture data elements to selectively display picture elements collectively forming the picture and adjust the brightness of the picture to be displayed in response to the control information elements. The delay circuit 15 is adapted to delay the enable signal for a predetermined time period so that the enable signal is circulated to a subsequent control portion so as to ensure that the enable signal is circulated.

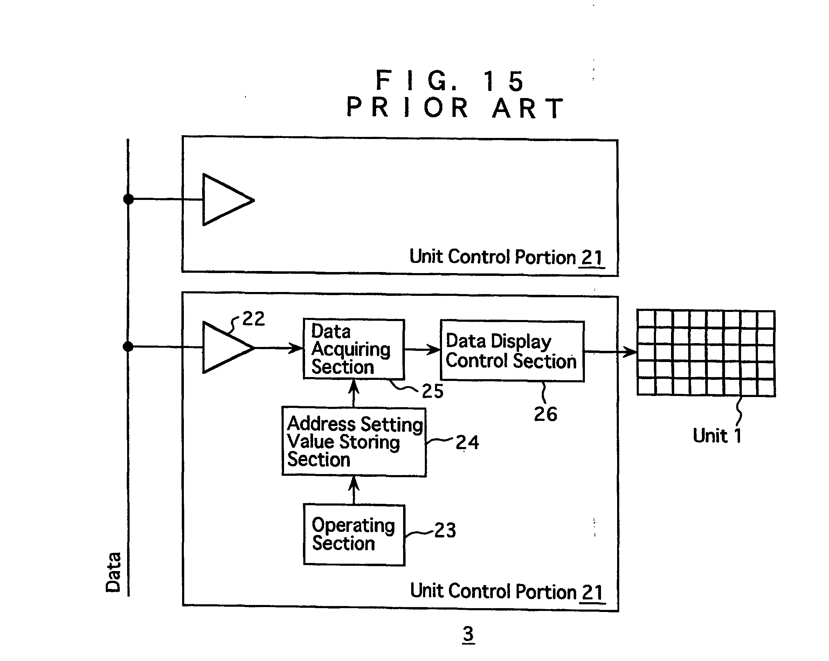

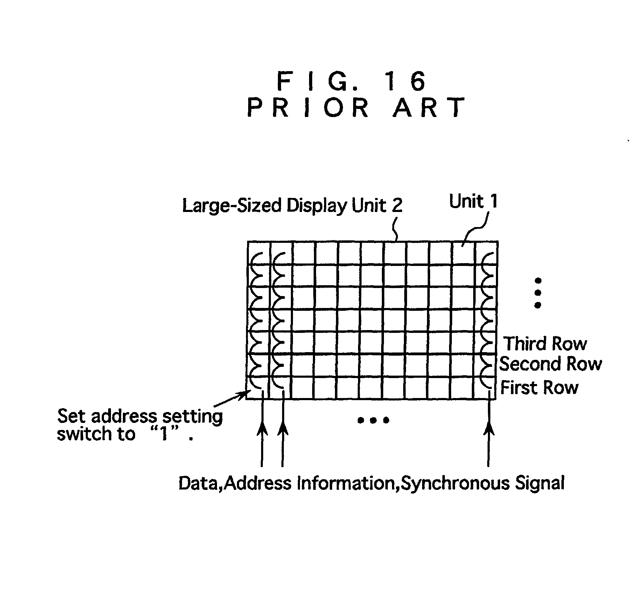

The description is then directed to a second conventional large-sized unit apparatus comprising an address transmitting system with reference to FIG. 15 to FIG. 17 of the drawings. The second conventional large-sized display unit 3 is shown in FIG. 15 as comprising a plurality of unit control portions 21 of the address transmitting system and a plurality of units 1. The unit control portions 21 are adapted to control the units 1 in response to the picture data elements indicative of a picture to selectively display picture elements collectively forming the picture. Each of the unit control portions 21 includes a buffer 22 for temporally storing picture data elements in accordance with the data processing rate so that the unit control portion 21 can properly process the picture data elements, an operating section 23 for operating an address setting switch to set an address value, as shown in FIG. 16, so as to ensure that the address value of each of the units is unique, an address setting value storing section 24 for storing the address value set by the operating section 23, a data acquiring section 25 for selecting a picture data element destined for the unit control portion 21 from among a plurality of picture data elements in accordance with the address value stored in the address setting value storing section 24 to acquire a picture information element and a control information element required for the unit from the picture data element thus selected, and a data display control section 26 for controlling the unit 1 so as to selectively display a picture element in response to the picture information element acquired by the data acquiring section 25. In this connection, it is to be noted that each of the unit control portions 21 is identical to one another in construction, and each of the units 1 is identical to one another in construction. Therefore, the unit control portion 21 refers to any one of the unit control portions 21 and the unit 1 refers to any one of the units 1. The address setting value storing section 24 may be, for example, a register. The data display control section 26 is adapted to control the unit 1 to selectively display a picture element forming part of the picture in response to the picture information element and adjust the brightness of the picture element to be displayed in response to the control information element.

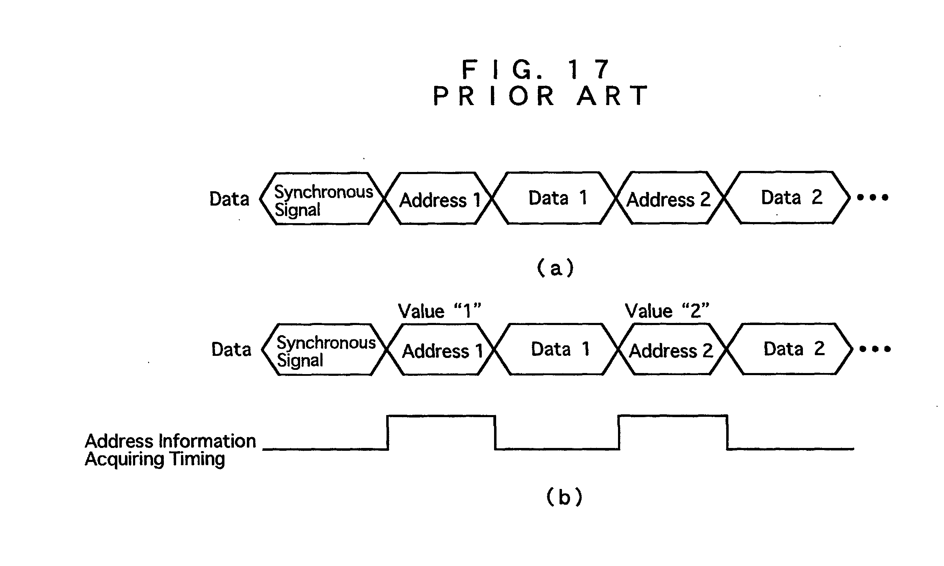

More specifically, the picture data elements are transmitted to the unit control portions 21 from the signal distributing unit 4 through bus connections in a form of data. The structure of the data to be transmitted to the unit control portions 21 is shown in FIG. 17 as comprising a synchronous signal, address information elements, and picture data elements each including picture information elements and control information elements. In FIG. 17, "address 1", "address2", ... refer to the address information elements, and "data 1", "data 2", ... refer to the picture data elements. The synchronous signal is used by a unit control portion 21 to adjust timing to acquire address information elements from the data. This means that the unit control portion 21 is operative to adjust timing to acquire address information elements contained in the data distributed by the signal distributing unit 4 using the synchronous signal. The data acquiring section 25 of the unit control portion 21 is operative to sequentially compare each of the address information elements of the data transmitted from the signal distributing unit 4 with the address value stored in the address setting value storing section 24. The data acquiring section 25 is operative to acquire a picture data element following an address information when the data acquiring section 25 judges that the address information element is identical with the address value stored in the address setting value storing section 24 and recognize that the picture data element following the address information element judged to be identical with the address value stored therein is destined for the unit control portion.

In the second conventional large-sized display unit 3 above described, the unit control portion 21 can select a picture data element from among a plurality of picture data elements in accordance with the address value stored in the address setting value storing section 24 to acquire a picture information element and a control information element from the picture data element thus selected.

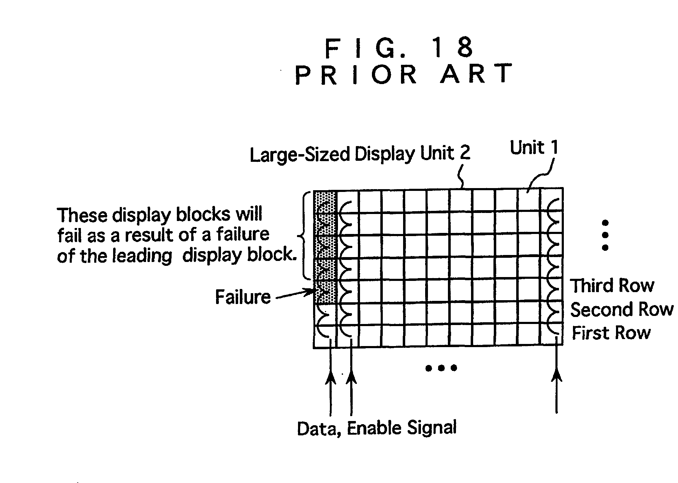

The conventional large-sized display apparatus having control portions 11 of the enable signal transmitting system, however, encounters such a problem that one or more units or control portions, for example, may fail to circulate the enable signal to the subsequent unit since the enable signal is continuously circulated from one unit to another all the time. A failure of a unit or a unit control portion connected with the unit of an array causes failures of the rest of all units and control portions connected with the unit control portions following the failed unit or control portion connected with the unit of the same array designated by a shadowed area as shown in FIG. 18.

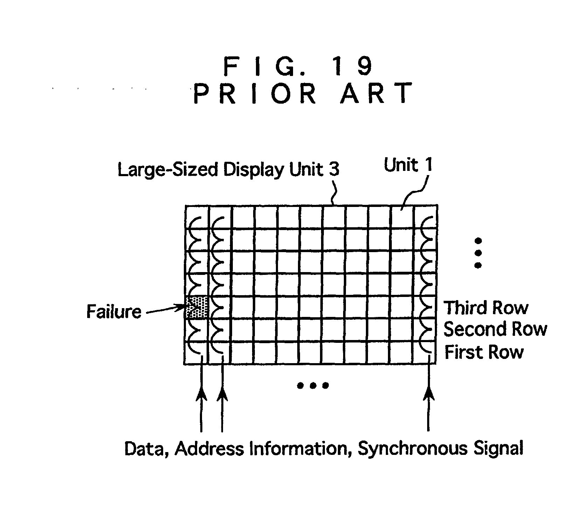

The conventional large-sized display apparatus having control portions 21 of the address transmitting system, on the other hand, may prevent the aforesaid problem since each of the unit control portions 21 stores a unique address value. A failure of a unit designated by the shadowed area will not cause failures of the units following the unit as shown in FIG. 19. The conventional large-sized display apparatus having control portions 21 of the address transmitting system, however, encounters another problem that the unique address values must be accurately set in the address setting value storing section 24 of each of the unit control portions 21. Setting address values in the address setting value storing section 24 of each of the unit control portions 21 is required to operate the operating section 23 of each of the unit control portions 21, and occasionally undertake constructions, resulting in laborious and inefficient works. Especially, the large-sized display apparatus is carried, all of the address values must be set again accordingly depending on the position of the large-sized display apparatus to be placed.

The present invention is made with a view to overcoming the previously mentioned drawbacks inherent to the conventional large-sized display apparatus and the conventional large-sized display unit.

### Summary of the Invention

It is therefore an object of the present invention to provide a large-sized display apparatus in which an enable signal is not continuously circulated from one unit to another all the time, thereby drastically reducing the occurrence probability of a failure of a unit or a unit control portion of one array causing failures of units following the failed unit of the same array.

It is another object of the present invention to provide a large-sized display apparatus which does not require any laborious work or constructions of setting address values in, for example, the address setting value storing section of each of the unit control portions 21 of the conventional large-sized display apparatus.

It is another object of the present invention to provide a large-sized display unit in which an enable signal is not continuously circulated from one unit to another all the time, thereby drastically reducing the occurrence probability of a failure of a unit or a unit control portion of one array causing failures of units following the failed unit of the same array.

It is a further object of the present invention to provide a large-sized display unit which does not require any laborious work or constructions of setting address values in, for example, the address setting value storing section of each of the unit control portions of the conventional large-sized display unit.

In accordance with a first aspect of the present invention, there is provided a large-sized display apparatus comprising: a picture display unit including a plurality of units each having a light emitting element; and a plurality of unit control portions each uniquely corresponding to and connected with one of the units for acquiring data including a picture data element and an address information element used for displaying the picture data element, and controlling the corresponding one of the units in accordance with the data thus acquired, and each of the unit control portions operative to acquire the data in accordance with the address information element, whereby each of the unit control portions includes: an address acquiring section for acquiring the address information in accordance with a timing signal specific to each of the unit control portions; and a data acquiring section for acquiring the data in accordance with the address information acquired by the address acquiring section.

This constitution makes it possible for each of the unit control portions to acquire and set an address information element in accordance with the timing signal specific to each of the unit control portions, thereby eliminating the needs for any laborious work or constructions of setting address values in the address setting value storing section of each of the unit control portions of the large-sized display apparatus. Furthermore, each of the unit control portions stores the address information thus acquired. This constitution makes it possible for the timing signal not to be continuously circulated from one unit to another all the time, thereby reducing the occurrence probability of a failure of a unit or a unit control portion of one array causing failures of units following the failed unit of the same array. Even in the unlikely event that a unit or a unit control portion should fail to circulate the timing signal to the subsequent one, the large-sized display unit can be, for example, turned-on again so that the timing signal is newly circulated from one control portion to another, and the unit control portions acquire and store respective address information elements, i.e., address information in their respective memories. The occurrence probability of a failure of a unit or a unit control portion of one array causing failures of units following the failed unit of the same array is even more reduced.

In the large-sized display apparatus according to the present invention, the units may be aligned in a first direction and a second direction perpendicular to the first direction, each of the unit control portions further includes a delay circuit for delaying the timing signal for a predetermined period to ensure that the timing signal is circulated to a subsequent control portion, whereby the plurality of units form a plurality of arrays in the first direction, the unit control portions respectively connected with the units aligned in the first direction are connected with one after another, the arrays start with respective leading units, and leading unit control portions respectively connected with the leading units are operative to receive the timing signal.

This constitution that the timing signal to be delayed and circulated to a subsequent leading unit control portion one after another, makes it possible for each of the unit control portions to acquire an address information element once the timing signal is received by the leading unit control portions respectively connected with the leading units.

In the large-sized display apparatus, the leading unit control portions respectively connected with the leading units may be connected with one after another so that the delay circuit of each of the leading unit control portions is operative to delay the timing signal for a predetermined period to ensure that the timing signal is circulated to a subsequent leading unit control portion connected therewith.

This constitution that the leading unit control portions respectively connected with the leading units are connected with one after another so that the delay circuit of each of the leading unit control portions is operative to delay the timing signal for a predetermined period makes it possible for each of the unit control portions to acquire an address information element once the timing signal is received by a first leading unit control portion connected with a first leading unit.

In accordance with a second aspect of the present invention, there is provided a large-sized display apparatus comprising: a picture display unit including a plurality of blocks each including a plurality of units each having a light emitting element, a plurality of block control portions each uniquely corresponding to and connected with one of the blocks for acquiring data including picture data elements and address information element used for displaying the picture data elements, and controlling the corresponding one of the blocks in accordance with the data thus acquired, each of the block control portions operative to acquire the data in accordance with the address information element, each of the block control portions including: an address acquiring section for acquiring the address information in accordance with a timing signal specific to each of the block control portions; and a data acquiring section for acquiring the data in accordance with the address information acquired by the address acquiring section, whereby each the block control portions is operative to output data portions to each unit on the basis of the data thus acquired to each unit.

This constitution makes it possible for each of the block control portions to acquire and set an address information element in accordance with the timing signal, thereby eliminating the needs for any laborious work or constructions of setting address values in the address setting value storing section of each of the unit control portions of the large-sized display apparatus. Furthermore, each of the unit control portions stores the address information thus acquired. This constitution makes it possible for the timing signal not to be continuously circulated from one unit to another all the time, thereby reducing the occurrence probability of a failure of a unit or a unit control portion of one array causing failures of units following the failed unit of the same array. Even in the unlikely event that a unit or a unit control portion should fail to circulate the timing signal to the subsequent one, the large-sized display unit can be, for example, turned-on again so that the timing signal is newly circulated from one control portion to another, and the unit control portions acquire and store respective address information elements, i.e., address information in their respective memories. The occurrence probability of a failure of a unit or a unit control portion of one array causing failures of units following the failed unit of the same array is even more reduced.

### Brief Description of the Drawings

The features and advantages of the large-sized display apparatus and the large-sized display unit according to the present invention will more clearly be understood from the following description taken in conjunction with the accompanying drawings in which:
FIG. 1 is a block diagram showing a preferred embodiment of a large-sized display apparatus according to the present invention,
FIG. 2 is a block diagram showing a unit control portion forming part of a preferred embodiment of the large-sized display unit according to the present invention,
FIG. 3 is a block diagram showing a construction of data 120 to be inputted to the large-sized display unit shown in FIG. 2,
FIG. 4 is a diagram illustrated for explaining how a first address information element destined for a first control portion is acquired in the large-sized display unit 101 shown in FIG. 2,
FIG. 5 is a diagram illustrated for explaining how a second address information element destined for a second unit is acquired in the large-sized display unit shown in FIG. 2,
FIG. 6 is a diagram illustrated for explaining a principle of acquiring picture information elements performed by the large-sized display unit shown in FIG. 2,
FIG. 7 is a block diagram showing a block control portion forming part of a second embodiment of a large-sized display unit of a large-sized display apparatus according to the present invention,
FIG. 8 is a diagram illustrated for explaining a principle of controlling a plurality of units performed by control portions forming part of a third embodiment of a large-sized display unit according to the present invention,
FIG. 9 is a block diagram illustrated for explaining address setting operations performed by the unit control portions forming part of the large-sized display unit shown in FIG. 9,
FIG. 10 is a block diagram showing a conventional large-sized display apparatus, and a first conventional large-sized display unit,
FIG. 11(a) is a diagram illustrated for explaining a principle of acquiring picture information elements performed by the first conventional large-sized display unit,
FIG. 11(b) is a diagram illustrated for explaining a principle of acquiring picture information elements performed by the first conventional large-sized display unit,
FIG. 12 is a block diagram showing control portions and a plurality of units 1 forming part of the first conventional large-sized display unit,
FIG. 13 is a diagram illustrated for explaining an enable signal transmitting system performed in the first conventional large-sized display unit shown in FIG. 12,
FIG. 14 is a diagram illustrated for explaining an enable signal transmitting system performed in the first conventional large-sized display unit shown in FIG. 12,
FIG. 15 is a block diagram showing control portions forming part of a second conventional large-sized display unit,
FIG. 16 is a diagram illustrated for explaining an address transmitting system performed in the second conventional large-sized display unit shown in FIG. 15,
FIG. 17(a) is a diagram illustrated for explaining a construction of data to be inputted to the second conventional large-sized display unit shown in FIG. 15,
FIG. 17(b) is a diagram illustrated for explaining a principle of acquiring data with reference to address information performed by the second conventional large-sized display unit shown in FIG. 15,
FIG. 18 is a diagram illustrated for explaining a drawback of the enable signal transmitting system performed in the first conventional large-sized display unit shown in FIG. 12, and
FIG. 19 is a diagram illustrated for explaining a drawback of the address transmitting system performed in the second conventional large-sized display unit shown in FIG. 15.

### Description of the Preferred Embodiments

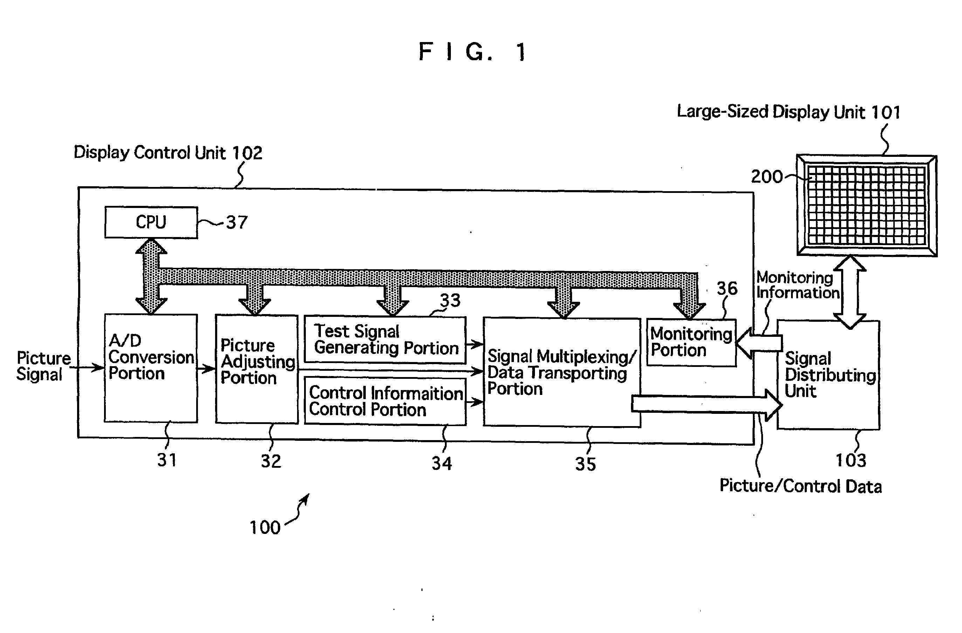

The preferred embodiments of the large-sized display apparatus and large-sized display unit according to the present invention will be described hereinlater with reference to FIGS. 1 to 9.

The description hereinlater will be directed to the large-sized display unit 100.

A large-sized display apparatus 100 shown in FIG. 1 comprises a aforesaid large-sized display unit 101 including a plurality of units 200, a display control unit 102 for converting an inputted picture signal indicative of a picture to a picture data, i.e., a signal of a predetermined form, and a signal distributing unit 103 for distributing the signal element of a predetermined form to be inputted to the display control unit 102.

The display control unit 102 is adapted to input a picture signal indicative of a picture, process and convert the picture signal thus inputted to a signal in a form conformable to the large-sized display unit 101 to be outputted to the signal distributing unit 103.

As shown in FIG. 1, the display control unit 102 includes an analog-digital (hereinlater referred to as "A/D") converting portion 31 for converting the picture data to a digital picture signal, a picture adjusting portion 32 for adjusting the digital picture signal in terms of picture, a test signal generating portion 33 for generating a test signal, a control signal generating portion 34 for generating a control signal to used to control the picture to be displayed, a signal multiplexing/data transmitting portion 35 for multiplexing the picture signal and the control signal to output a multiplexed signal thus multiplexed, a monitoring portion 36 for monitoring a display information such as a power failure and a failure of a cooling fan connected with the units 200, and a central processing unit (hereinlater referred to as "CPU") 37 for connecting and controlling constituting elements through bus connections.

The A/D converting portion 31 is adapted to input and convert the picture data to digital picture signal to be outputted to the picture adjusting portion 32.

The picture adjusting portion 32 is adapted to input the digital picture signal converted by the A/D converting portion 31, and adjust the digital picture signal in terms of, for example, dot size and contour so as to be properly displayed in the large-sized display unit 101 (this process of adjusting digital picture signal will be hereinlater referred to as "picture adjustment").

The test signal generating portion 33 is adapted to generate a test signal including a test pattern to be outputted to the signal multiplexing/data transmitting portion 35. The control signal generating portion 34 is adapted to generate screen information used to display and control screen display information including power information, brightness information, unit display information, etc. to be outputted to the signal multiplexing/data transmitting portion 35.

Furthermore, the control signal generating portion 34 is adapted to control a picture to be displayed in the large-sized display unit 101 in accordance with a control of the CPU 37.

The signal multiplexing/data transmitting portion 35 is adapted to generate digital picture data to be displayed in the large-sized display unit 101. The signal multiplexing/data transmitting portion 35 is then adapted to scan-convert the digital picture data and output the scan-converted digital picture data to the signal distributing unit 103.

Furthermore, the signal multiplexing/data transmitting portion 35 is adapted to control brightness values and adjusting values respectively set in units 200. In general, the light-on or light-off of the light emitting element of each of the units 200 is controlled on the basis of the picture data outputted by the signal multiplexing/data transmitting portion 35 multiplied by a brightness value specific to the large-sized display unit 101 as a whole and an adjusting value specific to each of the units 200. This means that the light-on or light-off state of the light emitting element of each of the units 200 is controlled by adjusting the brightness value and the adjusting value.

The monitoring portion 36 is adapted to input the screen information generated by the large-sized display unit 101 through the signal distributing unit 103 to monitor the operating state of the large-sized display unit 101 such as a power failure and a failure of a cooling fan connected with the units 200.

The signal distributing unit 103 is adapted to convert the picture data generated by the signal multiplexing/data transmitting portion 35 to a plurality of data elements respectively destined to units 200 collectively forming parts of the large-zed display unit 101 to be outputted to the large-sized display unit 101.

The description hereinlater will be directed to the large-sized display unit 101.

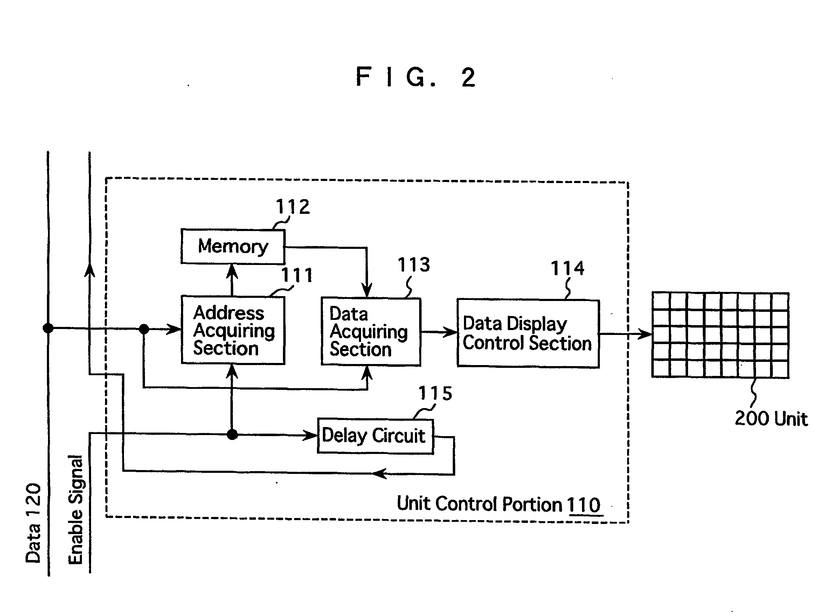

The large-sized display unit 101 is shown in FIG. 2 as comprising a plurality of units 200 and a plurality of unit control portions 110 respectively placed in the vicinity of the units 200. Each of the unit control portions 110 corresponding to one of the units 200 is adapted to obtain data used to display and control the one of the units 200 and output the data thus obtained to and control the one of the units 200.

In the embodiment of the large-sized display unit 101 according to the present invention, the unit control portions 110 form a plurality of arrays in the vertical direction. The arrays start with respective leading units aligned in the bottom row. The unit control portions 110 of each array are electrically connected with one another.

A unit control portion 110 is shown in FIG. 2 as including an address acquiring section 111 for acquiring address information from picture data elements transmitted on the data bus in accordance with an inputted enable signal, a memory 112 for storing the address information acquired by the address acquiring section 111, a data acquiring section 113 for acquiring data from data transmitted on the data bus in accordance with the address stored in the memory 111, and a data display control section 114 for controlling the unit so as to display a picture element in accordance with data acquired by the data acquiring section 113 and adjust the display state of the picture element in terms of, for example, brightness on the basis of control data, and a delay circuit 115 for delaying the inputted enable signal for a predetermined time so that the enable signal is circulated to a subsequent control portion whereby the unit 200 is operative to display the picture element in accordance with picture data, i.e., data acquired by the data acquiring section 113.

The address acquiring section 111 is connected with the data bus and operative to input an enable signal therethrough. The address acquiring section 111 is operative to determine a timing to acquire address information transmitted on the data bus in accordance with the input enable signal. The principle of acquiring the address information will be described later.

The data acquiring section 113 is connected with the data bus and operative to input a synchronous signal, determine a timing to acquire data in accordance with the address information stored in the memory 112 and the synchronous signal thus inputted, select and acquire data from among a plurality of data transmitted on the data bus at the timing thus determined, and then output the data thus selected and acquired to the data display control section 114.

The principle of acquiring data will be described later.

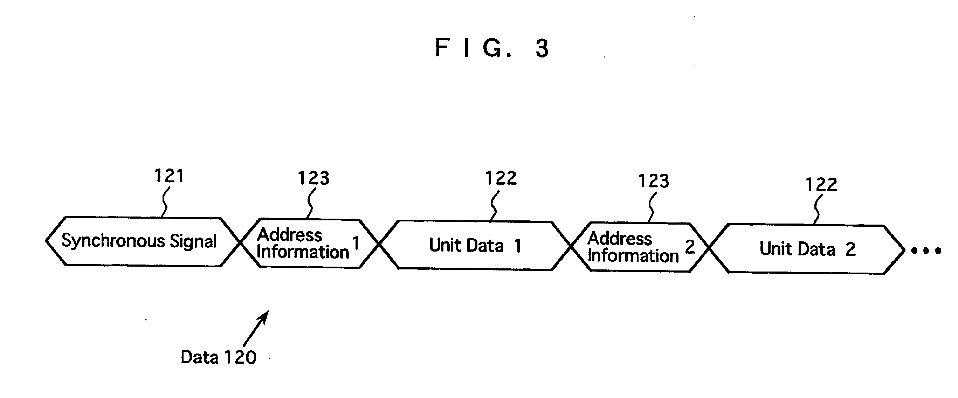

Data transmitted on the data bus, i.e., data 120 generated by the aforesaid display control unit 102 and the signal distributing unit 103 comprises, for example, a plurality of synchronous signals 121, a plurality of data 122 each including picture data to be displayed in the screen of one of units 200, and control data used to control the display state of the one of units 200 (hereinlater referred to as "unit data"), and a plurality of address information 123 each sandwiched between the one of the synchronous signals 121 and the one the data 122 as shown in FIG. 3. Each of the address information 123 is unique to each of the unit control portions 110 and used to acquire unit data 122. Each of the synchronous signals 121 are used by the unit control portions 110 for synchronization. Each of the address information 123 is used by the unit control portions 110 for setting address information and acquiring unit data 122.

The unit control portions 110 respectively connected with the units 200 aligned in a column are connected with one after another. They delay circuit 115 is operative to delay the enable signal for a predetermined time period so that the enable signal is circulated to a subsequent unit control portion 110. A row starts with a leading unit 200. This means that the enable signal is circulated from a unit control portion 110 connected with the leading unit 200 to a subsequent unit control portion 110 connected with a subsequent unit following the leading unit 200 to ensure that the enable signal is circulated through the unit control portions 110 connected with the units 200 aligned in the same column.

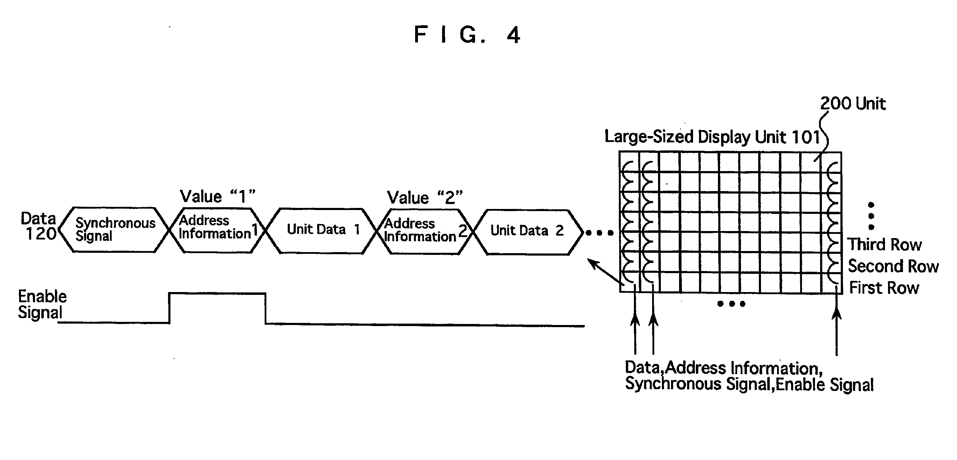

The address information is set to, for example, a unit control portion 110-1. The data 120 is transmitted on the data bus as shown in FIG. 4. A leading unit control portion 110-1 connected with the leading unit is operative to input the enable signal at the timing to acquire the address information 1. In the leading unit control portion 110-1, the data acquiring section 111 is then operative to acquire the address information 1 and the memory 112 is operative to store the address information 1 acquired by the data acquiring section 111.

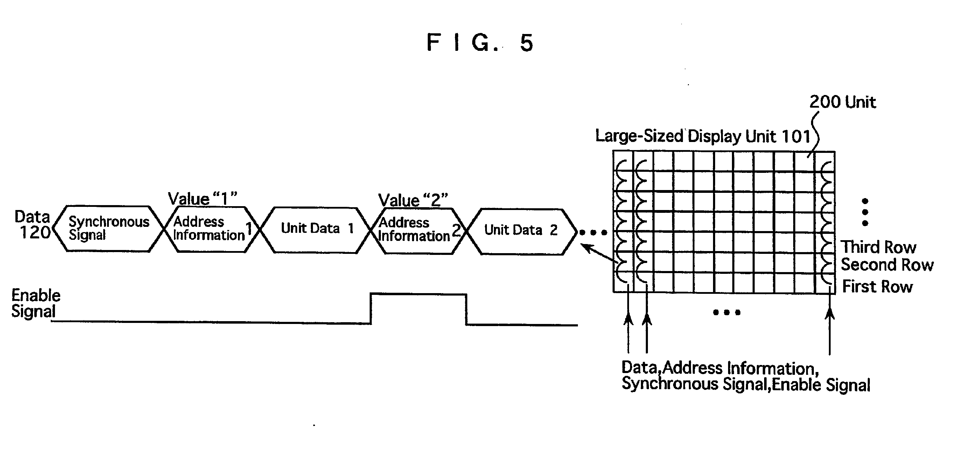

A subsequent unit control portion 110-2 connected with a subsequent unit following the leading unit is operative to input the enable signal delayed by the delay circuit 115 of the unit control portion 110-1 for a predetermined period from the leading unit control portion 110-1 as shown in FIG. 5. This leads to the fact that the subsequent unit control portion 110-2 is operative to acquire the address information 2 and store the data thus acquired in the memory 112.

In the large-sized display unit thus constructed, all the unit control portions 110 each uniquely corresponding to a unit 200 can set addresses for the corresponding units 200, and acquire unit data 122 on the basis of the address thus set.

In the present embodiment, the enable signal may be inputted only at a planed time such as at a time when the large-sized display apparatus is turned on. This means that the addresses are once set in the unit control portions, the unit control portions operate in accordance with the addresses thus set, thereby eliminating the needs for the enable signal to be continuously circulated.

The operation of acquiring data will be described hereinlater.

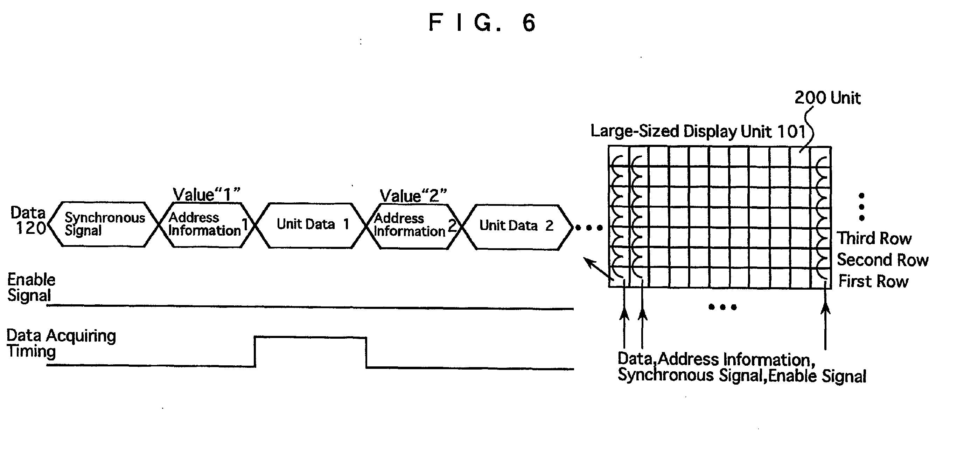

While operating in a regular state, i.e., after the addresses are set in the unit control portions, the data acquiring section 113 is operated to generate a data acquiring timing signal in accordance with the address stored in the memory and the synchronous signal, acquire unit data 1 at the timing corresponding to the data acquiring timing signal, and output the unit data 1 thus acquired to the data display section 114 as shown in FIG. 6.

As described above, the present embodiment, in which each of the unit control portions 110 can acquire address information 123 contained in the data 120 in accordance with the enable signal and set an address unique to the corresponding one of the units 200, does not require any laborious work or constructions of setting address values in, for example, the address setting value storing section of each of the unit control portions 110 of the large-sized display apparatus.

Furthermore, the present embodiment of the large-sized display unit 101, in which the delay circuit 115 of each of the unit control portion can delay the enable signal for a predetermined period to ensure that the enable signal inputted by a leading unit control portion 110 connected with a leading unit 200 is circulated through all of the unit control portions 110 connected with the units 200 aligned in the same column.

This means that the present embodiment of the large-sized display unit, in which the unit control portions respectively connected with the units aligned in a vertical column, the enable signal inputted by leading unit control portions connected with leading units aligned in the first row can be circulated through all of the unit control portions 110 of the large-sized display unit 101, thereby enabling all of the unit control portions 110 to accurately acquire respective address information.

Furthermore, each of the unit control portions 110 can set an address for the corresponding one of the units 200 once the enable signal is circulated and inputted. This means that the each of the unit control portions 110 can accurately acquire the data 122 and eliminate the need for the enable signal to be circulated again.

In the present embodiment of the large-sized display unit 101, each of address information is placed prior to corresponding one of unit data. Alternatively, each of the address information and the corresponding one of the unit data may constitute a group. This means that any constitution is possible as long as each of the address information is associated with the corresponding one of the unit data.

In the present embodiment of the large-sized display unit 101, the unit control portions 110 are respectively connected with the units, and operative to acquire data such as picture data to be displayed in the respective units. Alternatively, a number of unit control portions 110 may constitute a block. This means that each of the blocks may acquire data in place of the unit control portions 110 and then distribute the data to the unit control portions 110.

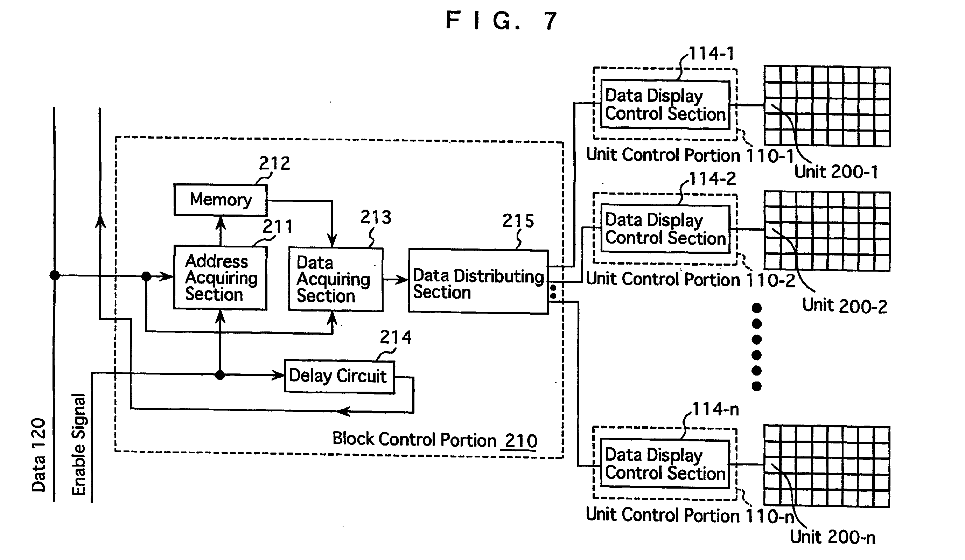

In this case, a block control portions 210 includes an address acquiring section 211, a memory 212, a data acquiring section 213, a delay circuit 214, and a data distributing section 215 for distributing data to the data display control sections 114 of the unit control portions 110 as shown in FIG. 7. The address acquiring section 211, the memory 212, the data acquiring section 213, and the delay circuit 214 are the same as those of the unit control portions 110 as described above.

The data distributing section 215 is operative to convert the data acquired by the data acquiring section 213 into a plurality of data respectively corresponding to the units 200 to be respectively outputted to the data display control sections 114 of the units 200. Each of the data display control sections 114 is operative to control one of the unit 200 to display picture in accordance with the data thus outputted.

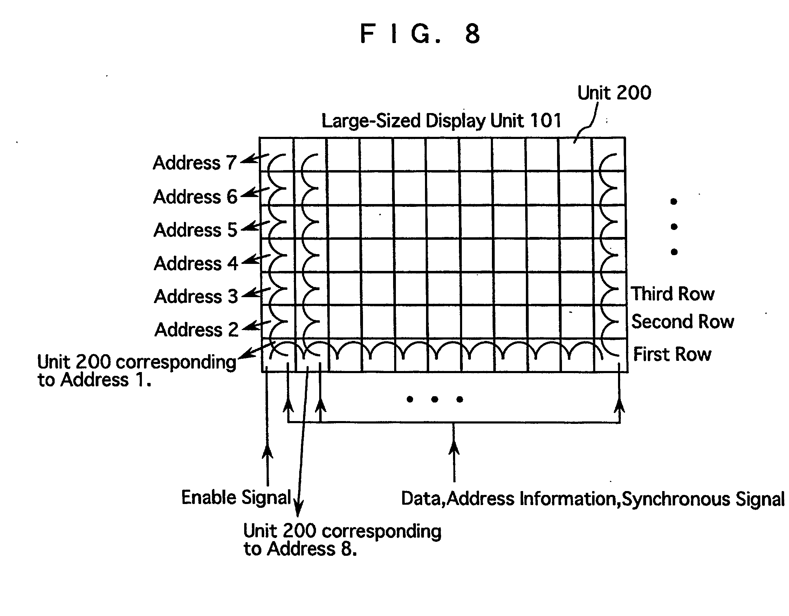

In the present embodiment of the large-sized display unit, each of the unit control portions 110 connected with units 200 aligned in a vertical column are connected with one after another, and the enable signal is inputted to leading unit control portions 110 respectively connected with units 200 respectively leading the vertical columns. Alternatively, leading unit control portions respectively connected with leading units aligned in first rows may be connected with one after another so that the enable signal inputted by, for example, a first leading unit control portion 110 connected with a first leading unit 200 starting the leading units 200 is circulated through all of the leading unit control portions 110 connected with the first leading units 200 and then circulated through all of the unit control portions 110 connected with the leading unit control portions 110, i.e., all of the unit control portions 110 of the large-sized display unit 101 as shown in FIG. 8.

In this case, the enable signal is inputted by first leading unit control portions 110 connected with the first leading units 200 aligned in a first row, the delay circuit 115 of each of the leading unit control portions 110 is operative to delay the enable signal for a predetermined period to ensure that the enable signal is circulated to a subsequent leading unit control portion connected with the leading unit following the first leading unit in the first row.

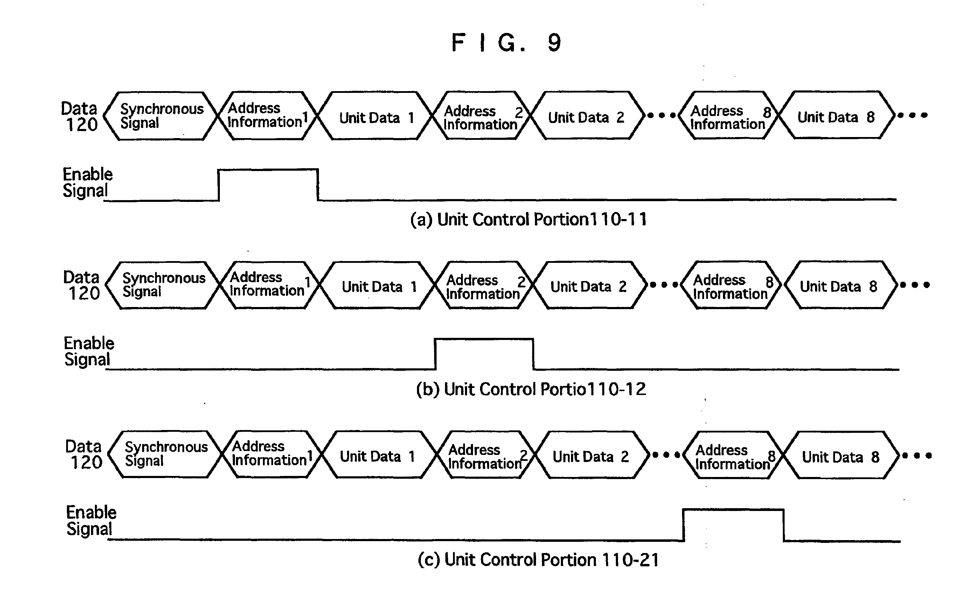

The large-sized display unit 101 includes, for example, seven rows of units as shown in FIG. 8, the unit control portion 110-11 connected with a unit of the first row and the first column of the units 200, i.e., at the lower left of the screen of the large-sized display unit 101 inputs, for example, address 1 as shown in FIG. 9. The enable signal is then circulated to subsequent unit control portions 110-12 to 110-17 connected with the units 200 aligned in the same first column, and the unit control portions 110-12 to 110-17 are respectively operative to acquire address information 2 to 7. The enable signal delayed by an interval for eight units is also circulated to a subsequent leading unit control portion 110-21 connected with a unit of the first row and the second column, and the subsequent leading unit control portion 110-21 is operative to acquire address information 8. This leads to the fact that the present embodiment of the large-sized display unit, in which the enable signal delayed by the interval for the amount of units forming the vertical column is circulated to the subsequent leading unit control portion, can circulate the enable signal through all of the units 200, enables all of the unit control portions to respectively determine timing to acquire address information to set addresses.

In this case, there may be transmitted on the data bus a plurality of data each including a plurality of unit data corresponding to units aligned in a vertical column. Alternatively, the data transmitted on the data bus may include a plurality of data portions each including a plurality of unit data corresponding to the units aligned in a vertical column. Alternatively, block control portions may be provided for blocks each including a plurality of units as described above.

In the present embodiment, the delay circuit 115 is operative to delay the enable signal to generate a unique timing signal so that each of the unit control portions 110 can input the timing signal specific to the unit control portion. The present invention is not limited to the specific embodiment except for the fact that each of the unit control portion 110 can input a unique timing signal.

The large-sized display apparatus according to the present invention, in which each of the unit control portions can acquire address information from the transmitted data on the basis of the timing signal unique to each of the unit control portions, can set a unique address for each of the unit control portions, thereby making it possible to acquire data on the basis of the unique address thus set. Furthermore, each of the unit control portions can set and store the address once the timing signal is inputted, thereby making it possible for the unit control portions to accurately acquire the data eliminating the need for the timing signal to be inputted again.

## Claims

1. A large-sized display apparatus comprising:
a picture display unit including a plurality of units each having a light emitting element; and
a plurality of unit control portions each uniquely corresponding to and connected with one of said units for acquiring data including a picture data element and an address information element used for displaying said picture data element, and controlling said corresponding one of said units in accordance with said data thus acquired, and each of said unit control portions operative to acquire said data in accordance with said address information element, whereby
each of said unit control portions includes:
an address acquiring section for acquiring said address information in accordance with a timing signal specific to each of said unit control portions; and
a data acquiring section for acquiring said data in accordance with said address information acquired by said address acquiring section.

2. A large-sized display apparatus as set forth in claim 1, in which
said units are aligned in a first direction and a second direction perpendicular to said first direction,
each of said control portions further includes a delay circuit for delaying said timing signal for a predetermined period to ensure that said timing signal is circulated to a subsequent control portion, whereby
said plurality of units form a plurality of arrays in said first direction,
said unit control portions respectively connected with said units aligned in said first direction are connected with one after another,
said arrays start with respective leading units, and
leading unit control portions respectively connected with said leading units are operative to receive said timing signal.

3. A large-sized display apparatus as set forth in claim 2, in which
said leading unit control portions respectively connected with said leading units are connected with one after another so that said delay circuit of each of said leading unit control portions is operative to delay said timing signal for a predetermined period to ensure that said timing signal is circulated to a subsequent leading unit control portion connected therewith.

4. A large-sized display apparatus comprising:
a picture display unit including a plurality of blocks each including a plurality of units each having a light emitting element,
a plurality of block control portions each uniquely corresponding to and connected with one of said blocks for acquiring data including picture data elements and address information element used for displaying said picture data elements, and controlling said corresponding one of said blocks in accordance with said data thus acquired, each of said block control portions operative to acquire said data in accordance with said address information element,
each of said block control portions including:
an address acquiring section for acquiring said address information in accordance with a timing signal specific to each of said block control portions; and
a data acquiring section for acquiring said data in accordance with said address information acquired by said address acquiring section, whereby
each said block control portions is operative to output data portions to each unit on the basis of said data thus acquired to each unit.
